# EUROPÄISCHE PATENTANMELDUNG

(11) **EP 1 521 109 A1**
(43) Veröffentlichungstag der Anmeldung: **06.04.2005**
(21) Anmeldenummer: 04021936.2
(22) Anmeldetag: 15.09.2004
(51) Int. Cl.: G02B 26/02

(54) **Variabler optischer Abschwächer**

(30) Priorität: 01.10.2003 DE 10345782
(71) Anmelder: Carl Zeiss SMS GmbH, 07745 Jena (DE)
(72) Erfinder: Menck, Alexander, Dr., 07743 Jena (DE); Grau, Dominik, 99510 Apolda (DE)
(74) Vertreter: Grimm, Christian

(57) **Zusammenfassung**

Es wird bereitgestellt ein variabler Abschwächer für ein elektromagnetisches Strahlenbündel (4), das sich entlang eines Strahlengangs ausbreitet, wobei der Abschwächer im Strahlengang zwei, in Ausbreitungsrichtung des Strahlenbündels (4) gesehen, hintereinander angeordnete Multiaperturblenden (1, 2) aufweist, die relativ zueinander bewegbar sind.

## Beschreibung

Die Erfindung betrifft einen variablen Abschwächer für ein elektromagnetisches Strahlenbündel.

Elektromagnetische Strahlenbündel, insbesondere Lichtstrahlung, kann beispielsweise mit einem Grauverlaufsfilter, bei dem eine Absorptionsschicht mit veränderlicher Dicke auf einem Substrat aufgetragen ist, dadurch variabel abgeschwächt werden, daß der Grauverlaufsfilter im Strahlengang verschoben wird, so daß die Transmission verändert wird. Schwierig ist bei einem Grauverlaufsfilter die reproduzierbare Herstellbarkeit und die Haltbarkeit bei kürzeren Wellenlängen. Insbesondere fehlen gerade bei Wellenlängen von kleiner als 200 nm auch geeignete Absorptionsschichten, so daß für diese Wellenlängen der Grauverlaufsfilter nicht mehr verwendbar ist.

Ferner ist die Verwendung von dielektrischen Kantenfiltern bekannt, bei denen das Licht, das bevorzugt monochromatisch ist, um eine gute variable Abschwächung zur gewährleisten, durch eine oder mehrere dielektrische Schichten geschickt wird, deren Transmission durch den Einfallswinkel des Lichts auf die Schicht variiert wird. Nachteilig ist bei dem dielektrischen Kantenfilter, daß das transmittierte Licht in Abhängigkeit des gerade eingestellten Einfallswinkels unterschiedlich polarisiert ist, was häufig unerwünscht ist.

Ausgehend hiervon ist es Aufgabe der Erfindung, einen variablen Abschwächer bereitzustellen, der einfach zu handhaben ist und leicht hergestellt werden kann und insbesondere auch für eine elektromagnetische Strahlung mit einer Wellenlänge von kleiner als 300 nm geeignet ist.

Erfindungsgemäß wird die Aufgabe gelöst durch einen variablen Abschwächer für ein elektromagnetisches Strahlenbündel, daß sich entlang eines Strahlenganges ausbreitet, wobei der Abschwächer im Strahlengang zwei, in Ausbreitungsrichtung des Strahlenbündels gesehen, hintereinander angeordnete Multiaperturblenden aufweist, die relativ zueinander bewegbar sind.

Unter einer Multiaperturblende wird hier jede Blende verstanden, die mehrere Blendenöffnungen umfaßt. Blendenöffnungen sind dabei Bereiche der Blende, bei denen die Transmission für das elektromagnetische Strahlenbündel größer ist als in den anderen Bereichen der Blende.

Durch das Vorsehen von zwei hintereinander geschalteten Multiaperturblenden, die relativ zueinander bewegbar sind, kann die effektive Transmissionsfläche für das Strahlenbündel durch die relative Bewegung der Blenden verändert werden. Die Schwächung kann somit durch Einstellen eines geometrischen Faktors (der relativen Lage der beiden Multiaperturblenden) erfolgen.

Die Blendenöffnungen können jede geometrische Form aufweisen, wie z.B. Kreis, Ellipse, Quadrat, Rechteck, Polygon. Auch können die Blendöffnungen so angeordnet sein, daß sie gitterförmig oder schachbrettartig verteilt sind. Andere Verteilungen sind auch möglich.

Insbesondere können bei dem erfindungsgemäßen Abschwächer bei zumindest einer der Multiaperturblenden die Bereiche zwischen den Aperturen als abschattende Bereiche ausgebildet sein. Damit kann die Multiaperturblende quasi als binäre Blende ausgebildet werden, die Bereiche aufweist, in denen die Strahlung transmittiert wird, und Bereiche, in denen keine Strahlung transmittiert wird. Dies läßt sich besonders einfach herstellen. So können die abschattenden Bereiche derart ausgebildet sein, daß sie die auf sie treffende Strahlung absorbieren. Als absorbierendes Material kann beispielsweise Chromoxid eingesetzt werden.

Eine besonders vorteilhafte Ausgestaltung des erfindungsgemäßen Abschwächers besteht darin, daß zumindest eine der beiden Multiaperturblenden ein für das elektromagnetische Strahlenbündel transparentes Substrat aufweist, wobei auf einer Oberseite des Substrats eine absorbierende oder reflektierende Schicht aufgebracht ist, die Löcher zum Bilden der Aperturen enthält. Somit läßt sich die Multiaperturblende leicht mit gängigen Herstellungsverfahren herstellen.

Insbesondere kann das Substrat plattenförmig ausgebildet sein, das eine ebene Oberseite aufweist, auf der die Schicht beispielsweise mit aus der Halbleiterfertigung bekannten Herstellungsverfahren aufgebracht ist.

Gemäß einer bevorzugten Ausgestaltung kann bei dem erfindungsgemäßen Abschwächer eine der beiden Multiaperturblenden ortsfest angeordnet und die andere Multiaperturblende bewegbar sein. Dies reduziert den mechanischen Aufwand, die Relativbewegung durchzuführen, da nur eine Blende zu bewegen ist, so daß der Abschwächer klein und kompakt ausgebildet werden kann.

Die andere Multiaperturblende kann insbesondere quer zur Ausbreitungsrichtung des Strahlenbündels bewegbar sein. Es ist jedoch auch eine Bewegung in und entgegengesetzt zur Strahlausbreitungsrichtung möglich. Ferner ist es auch möglich, daß die andere Multiaperturblende gegenüber der ortsfesten Multiaperturblende gedreht oder gekippt wird. Auch beliebige Kombinationen dieser Bewegungen sind möglich. Wesentlich ist nur, daß aufgrund der Bewegung eine Änderung der effektiven Öffnung für das Strahlenbündel erreicht wird.

Besonders bevorzugt ist es ferner, daß eine Stelleinrichtung vorgesehen ist, die die Relativbewegung der Multiaperturblenden bewirkt. Diese Stelleinrichtung ist besonders so ausgebildet, daß eine stufenlose bzw. eine sehr fein gestufte Bewegung möglich ist.

Eine bevorzugte Weiterbildung des erfindungsgemäßen Abschwächers besteht darin, daß beide Multiaperturblenden gleich ausgebildet sind. Dies erleichtert die Herstellung der Multiaperturblenden, wodurch die Kosten gesenkt werden können.

Natürlich ist es bei dem erfindungsgemäßen Abschwächer möglich, daß mehr als zwei Multiaperturblenden voneinander beabstandet angeordnet sind. Auch in diesem Fall können die Multiaperturblenden gleich oder unterschiedlich ausgebildet sein.

Ferner wird noch ein Laser mit einer eine Laserstrahlung erzeugende Lasereinheit und einem variablem Abschwächer, der der Lasereinheit nachgeordnet ist und auf den die Laserstrahlung trifft, vorgesehen, wobei der Abschwächer zwei, in Ausbreitungsrichtung der Laserstrahlung gesehen, hintereinander angeordnete Multiaperturblenden aufweist, die relativ zueinander bewegbar sind.

Damit wird ein Laser bereitgestellt, bei dem die Intensität der Laserstrahlung stufenlos mit einfachsten Mitteln einstellbar ist. Dies ist beispielsweise bei Excimer-Lasern von besonderem Vorteil, da bei diesen Lasern häufig die Einstellung der Intensität nur über die angelegte Hochspannung verändert werden kann, was jedoch andere Lasereigenschaften (meist unerwünscht) verändert.

Der erfindungemäßen Laser kann insbesondere als Mikroskopbeleuchtung eingesetzt werden. Es sind jedoch auch andere Anwendungen möglich, wie z.B. in der Materialbearbeitung oder bei Steppern in der Halbleiterfertigung.

Bevorzugte Weiterbildungen des erfindungsgemäßen Lasers sind dadurch gekennzeichnet, daß der variable Abschwächer des Lasers in gleicher Weise wie der oben beschriebene erfindungsgemäße Abschwächer weitergebildet ist.

Die Erfindung wird nachfolgend anhand eines Ausführungsbeispiels in Verbindung mit den Zeichnungen noch näher erläutert. Es zeigen:
- Fig. 1: eine schematische Ansicht eines variablen Abschwächers in einer ersten Abschwächstellung, und
- Fig. 2: eine schematische Ansicht des variablen Abschwächers von Fig. 1 in einer zweiten Abschwächstellung.

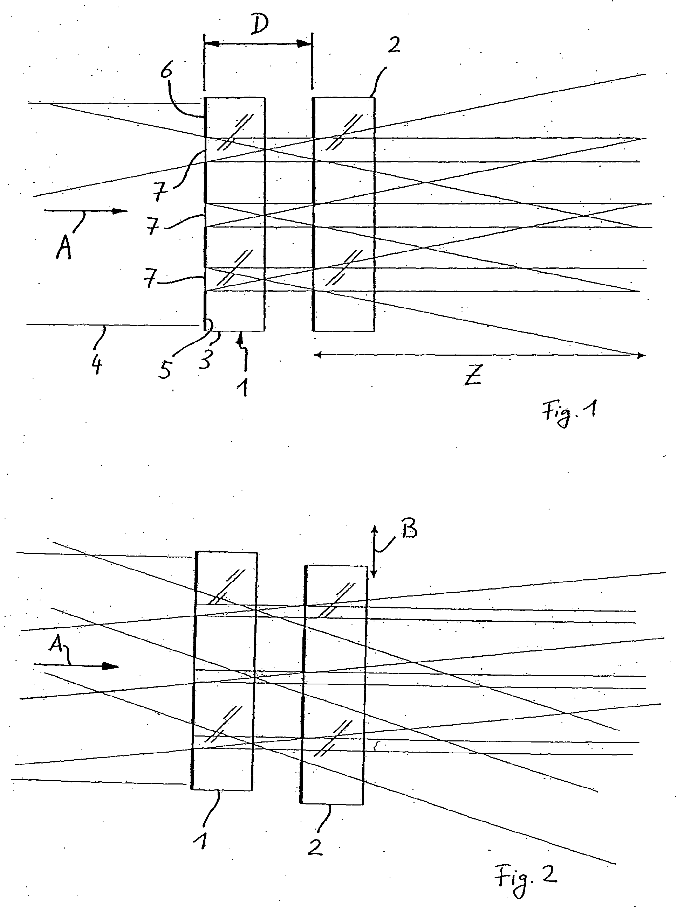

Der in Fig. 1 und Fig. 2 gezeigte variable Abschwächer umfaßt zwei Multiaperturblenden 1, 2, die gleich ausgebildet sind, so daß im folgenden nur noch die erste Multiaperturblende 1 detailliert beschrieben wird.

Die Multiaperturblende 1 umfaßt ein transparentes Substrat 3, das hier plattenförmig ausgebildet ist. Das Substrat 3 ist aus Glas hergestellt, das für das zugeführte elektromagnetische Strahlenbündel 4 mit einer Wellenlänge von 193 nm transparent ist. Das Strahlenbündel 4 wird von einem Excimer-Laser abgegeben, der hier nicht dargestellt ist.

Auf der Oberseite 5 des Substrats 3, auf die das Strahlenbündel 4 zuerst trifft, ist eine absorbierende Schicht 6 aus Chromoxid aufgebracht, die mehrere Öffnungen 7 aufweist. Die Öffnungen sind hier kreisförmig ausgebildet und weisen einen Durchmesser von etwa 1 mm auf und sind um etwa 1 mm voneinander beabstandet.

Hinter der Multiaperturblende 1, in Strahlausbreitungsrichtung A des Strahlenbündels gesehen, ist die zweite Multiaperturblende 2 angeordnet, wobei der Abstand D der beiden Multiaperturblenden 1 und 2 so gewählt ist, daß eine geeignete Durchmischung im transmittierten Strahlenbündel 8 etwa nach ungefähr 50 cm (Abstand Z) hinter der zweiten Multiaperturblende 2 erreicht wird, wenn die Divergenz des zugeführten Strahlenbündels 2 mrad beträgt.

Die in Fig. 1 gezeigte Abschwächstellung des Abschwächers ist eine erste Endstellung dahingehend, daß in dieser Stellung die minimalste Abschwächung erreicht wird.

In Fig. 2 ist nun eine zweite Abschwächstellung gezeigt, bei der die Abschwächung gegenüber der Stellung von Fig. 1 größer ist. Dies wird dadurch erreicht, daß die zweite Multiaperturblende 2 in einer Richtung quer zur Strahlausbreitungsrichtung A verschoben ist. Eine solche Verschiebung kann mittels eines Stellglieds (nicht gezeigt) durchgeführt werden und ist durch den Doppelpfeil B angedeutet. Aufgrund der Verschiebung ist für das Strahlenbündel die Größe der durch die Löcher 7 in den Multiaperturblenden 1, 2 erzeugte effektive Öffnung reduziert, so daß weniger Strahlung transmittiert wird. Damit wird die gewünschte Abschwächung erreicht.

Ein besonderer Vorteil des erfindungsgemäßen Abschwächers besteht darin, daß die Abschwächung über den gesamten Querschnitt des transmittierten Strahlenbündels 8 im wesentlichen gleich ist. Auch wird der Querschnitt des Strahlenbündels 4, 8 durch den Abschwächer nicht bzw. praktisch kaum verändert. Somit wird es mit dem erfindungemäßen variablen Abschwächer möglich, eine stufenlose Abschwächung eines elektromagnetischen Strahlenbündels durchzuführen. Dies ist insbesondere auch bei UV-Strahlung möglich, wobei in diesem Fall ein besonderer Vorteil noch darin besteht, daß der Abschwächer eine ausgezeichnete Haltbarkeit aufweist, da für diese Wellenlängen absorbierende Materialien mit gewünschter Haltbarkeit verfügbar sind und die Abschwächung über geometrische Parameter (Abmessungen und Anordnung der Multiaperturblenden) eingestellt wird.

Statt der Ausbildung der Multiaperturblenden 1 und 2 als Platten mit einer Absorptionsbeschichtung können sie auch als materielle Blenden realisiert werden, wie z.B. geätzte oder gebohrte Bleche aus absorbierendem Material.

## Patentansprüche

1. Variabler Abschwächer für ein elektromagnetisches Strahlenbündel (4), das sich entlang eines Strahlengangs ausbreitet, wobei der Abschwächer im Strahlengang zwei, in Ausbreitungsrichtung (A) des Strahlenbündels (4) gesehen, hintereinander angeordnete Multiaperturblenden (1, 2) aufweist, die relativ zueinander bewegbar sind.

2. Abschwächer nach Anspruch 1, bei dem bei zumindest einer Multiaperturblende (1, 2) die Bereiche zwischen den Aperturen (7) als abschattende Bereiche ausgebildet sind.

3. Abschwächer nach Anspruch 2, bei dem die abschattenden Bereiche so ausgebildet sind; daß sie die auf sie treffende Strahlung absorbieren.

4. Abschwächer nach einem der obigen Ansprüche, bei dem zumindest eine der Multiaperturblenden (1, 2) ein für das elektromagnetische Strahlenbündel (4) transparentes Substrat (3) aufweist, wobei auf einer Oberseite (5) des Substrats (3) eine absorbierende oder reflektierende Schicht (6) aufgebracht ist, die Löcher (7) zum Bilden der Aperturen enthält.

5. Abschwächer nach einem der obigen Ansprüche, bei dem eine der beiden Multiaperturblenden (1) ortsfest angeordnet und die andere Multiaperturblende (2) bewegbar ist.

6. Abschwächer nach Anspruch 5, bei dem die andere Multiaperturblende (2) quer zur Ausbreitungsrichtung (A) bewegbar ist.

7. Abschwächer nach einem der obigen Ansprüche, bei dem eine Stelleinrichtung vorgesehen ist, die die Relativbewegung der Multiaperturblenden (1, 2) bewirkt.

8. Abschwächer nach einem der obigen Ansprüche, bei dem beide Multiaperturblenden (1, 2) gleich ausgebildet sind.

9. Laser mit einer eine Laserstrahlung erzeugenden Lasereinheit und einem variablen Abschwächer, der der Lasereinheit nachgeordnet ist und auf den die Laserstrahlung trifft, wobei der Abschwächer zwei, in Ausbreitungsrichtung (A) der Laserstrahlung gesehen, hintereinander angeordnete Multiaperturblenden (1, 2) aufweist, die relativ zueinander bewegbar sind.
